(19) Europäisches Patentamt
European Patent Office
Office européen des brevets

(11) **EP 0 943 789 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.⁷: **F02C 1/10**, F02C 1/05

(21) Anmeldenummer: **99104986.7**

(22) Anmeldetag: **12.03.1999**

(54) **Einrichtung zur Umwandlung von Niedertemperaturwärme in elektrische Energie**

Apparatus to create electrical energy from low temperture heat

Dispositif pour la conversion de chaleur à température basse en énergie électrique

(84) Benannte Vertragsstaaten:
**AT CH DE DK FR IT LI NL SE**

(30) Priorität: **18.03.1998 DE 19811800**

(43) Veröffentlichungstag der Anmeldung:
**22.09.1999 Patentblatt 1999/38**

(73) Patentinhaber: **FuET Forschungs- und Entwicklungsges. Templin mbH & Co. KG
17268 Templin (DE)**

(72) Erfinder: **Imris, Pavel Dr.
17291 Hassleben (DE)**

(74) Vertreter: **Wolf, Günter, Dipl.-Ing.
Patentanwalt Günter Wolf,
An der Mainbrücke 16
63456 Hanau (DE)**

(56) Entgegenhaltungen:
**FR-A- 1 434 435          FR-A- 2 412 692
GB-A- 931 930          US-A- 3 742 707
US-A- 4 257 846**

## Beschreibung

Die Erfindung betrifft eine Einrichtung zur Umwandlung von sogenannter Niedertemperaturwärme in elektrische Energie.

Soweit bekannt, sind schon viele Versuche unternommen worden, um Niedertemperaturwärme, d.h. Wärme unter 200°C, in nutzbare kinetische oder elektrische Energie umzuwandeln, und zwar davon ausgehend, daß in der Natur und auch durch industrielle Umsetzprozesse (Abwärme) an sich in enormen Umfang Niedertemperaturwärme zur Verfügung steht.

Um nur ein Beispiel zu solchen Versuchen zu nennen, sei auf ein sogenanntes Temperaturgefälle-Kraftwerk zur Nutzung des Temperaturunterschiedes zwischen warmen Oberflächenwasser tropischer Meere und kälterem Tiefenwasser verwiesen.

Es bleibt also nach wie vor ein enormes Potential an Niedertemperaturwärme (beispielsweise geothermische, industrielle Abwärme- und Solarenergie) mangels geeigneter Umsetz- bzw. Umwandlungseinrichtungen ungenutzt, und der Erfindung liegt die Aufgabe zugrunde, eine Einrichtung zu schaffen, mit der verfügbare Wärme mit relativ niedriger Temperatur bei ausreichend hohem Wirkungsgrad in elektrische Energie umsetzbar ist.

Diese Aufgabe ist nach der Erfindung mit einer Einrichtung gemäß der im unabhängigen Anspruch 1 angeführten Merkmale gelöst, wobei Gas als Umsetzmedium bzw. Betriebsmittel verwendet wird, und zwar in der Weise, daß eine Umwandlung der dem Gas zugeführten Wärme in einem geschlossenen Arbeitskreisprozeß in mechanische und dann in elektrische Energie erfolgt.

Hierzu sei darauf hingewiesen, daß gemäß thermodynamischer Gesetze ein Wärmeumwandlungssystem nur dann wirtschaftlich arbeiten kann, wenn die innere Energie des Gases sehr hoch ist. Nach der Gleichung

$$pV = nRT$$

ist die innere Energie durch die absolute Temperatur T und durch den absoluten Druck p des im Volumen V enthaltenen Gases gegeben.

n ist dabei die MOL-Zahl des Gases im Volumen V, und R ist die Gaskonstante.

Soweit bekannt nutzen alle bekannten Einrichtungen die absolute Temperatur, um die innere Energie des Gases hochzuhalten. Im Gegensatz dazu nutzt die vorliegende Erfindung den absoluten Druck, um die innere Energie des Gases hochzuhalten, wobei folgendes vor sich geht bzw. bewirkt wird:

In den beiden erfindungsgemäß zusammengekoppelten Druckbehältern wird Gas auf einen hohen absoluten Druck verdichtet und dann wird einem dieser Druckbehälter Wärme zugeführt, wodurch darin der Gasdruck weiter erhöht wird. Der zweite Druckbehälter wird gleichzeitig gekühlt, d.h., es stellt sich zwischen den beiden Druckbehältern ein relativer Druckunterschied ein, der für den Antrieb einer Arbeitsmaschine ausnutzbar ist, die wiederum einen elektrischen Generator antreibt.

Aus US-A-4 257 846 ist ein Kreislauf zur Energieumwandlung bekannt, der zwischen zwei Druckbehältern stattfindet.

Die erfindungsgemäße Einrichtung, weitere Einzelheiten und vorteilhafte Ausführungsformen werden nachfolgend anhand von Ausführungsbeispielen näher erläutert.

Es zeigt schematisch

Fig. 1   in Seitenansicht und teilweise im Schnitt die einfachste Ausführungsform der Einrichtung;
Fig. 2   in Seitenansicht die Druckbehälter gemäß Fig. 1 in besonderer Verschaltung;
Fig. 3   in Seitenansicht und im Schnitt eine weitere besondere Verschaltung der Druckbehälter und
Fig. 4   in Seitenansicht die Verschaltung von insgesamt fünf Druckbehältern.

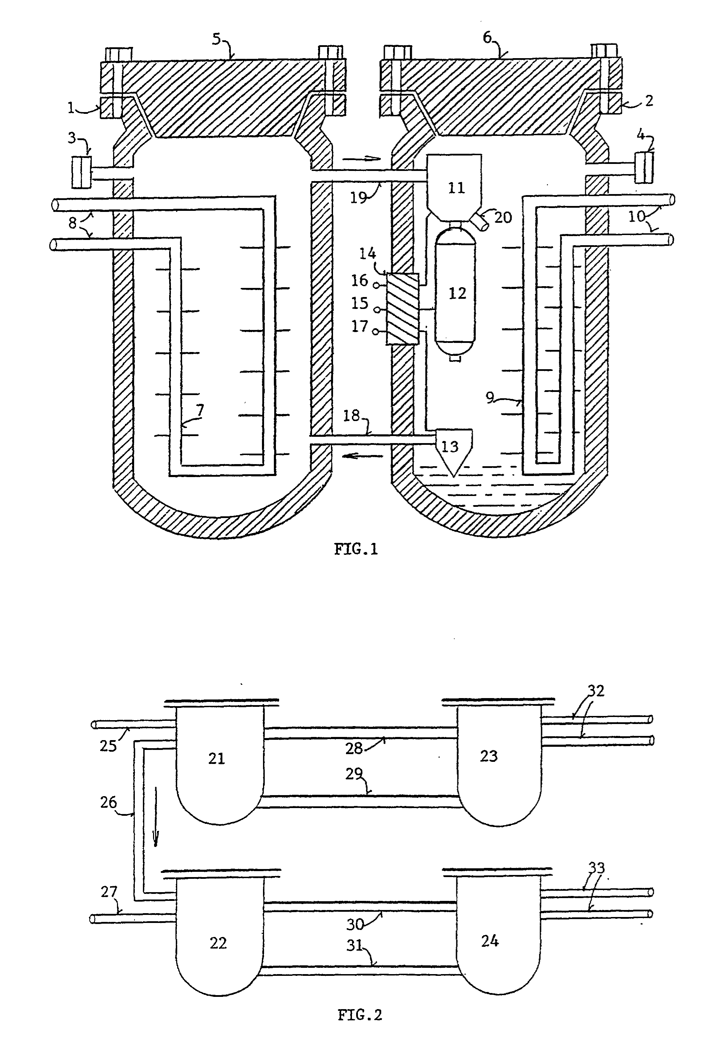

Beim Ausführungsbeispiel nach Fig. 1 wird den beiden Druckbehältern 1,2 Gas, wie Kohlendioxyd , von außen durch Befüllstutzen 3, 4 zugeführt und auf einen hohen absoluten Druck komprimiert . Beide Druckbehälter 1, 2 sind mit Verschlußdeckeln 5, 6 druckdicht verschlossen. In den Behältern 1, 2 sind Wärmetauscher 7, 9 angeordnet, wobei der Wärmetauscher 7 durch Leitung 8 an einer äußeren Wärmequelle (nicht dargestellt) angeschlossen ist und der Wärmetauscher 9 per Leitung 10 an eine Kühlquelle(ebenfalls nicht dargestellt).

Im Behälter 2 befindet sich eine Arbeitsmaschine 11, und zwar vorzugsweise in Form einer Gasturbine, die mit einem elektrischen Generator 12 gekoppelt ist. In der Wand des Behälters 2 ist druckdicht ein Kabeldurchgriffselement 14 für Steuer- und Stromleitungen 15,16,17 vorgesehen, das aber auch im Deckel 6 angeordnet werden könnte. Im unteren Bereich des Behälters 2 ist ferner eine elektrisch angetriebene Pumpe 13 zur Förderung von Flüssiggas angeordnet, die durch Leitung 18 das entstehende Flüssiggas vom Behälter 2 in den Behälter 1 pumpt.

Diese Einrichtung gemäß Fig. 1 wird wie folgt betrieben bzw. arbeitet wie folgt:

Als thermodynamisches Arbeitsmittel wird Kohlendioxyd benutzt, dessen kritische Temperatur 31°C und dessen kritischer Druck 72,9 atm beträgt und das sich bekanntlich bei einem Druck von 72,9 atm und bei einer Temperatur, die niedriger ist als 31°C, verflüssigt. Bei einer höheren Temperatur als den kritischen 31°C gelingt es selbst bei extrem hohen Drücken nicht, das $CO_2$ zu verflüssigen. Das zunächst durch die Anschlußstutzen 3,4 eingeleitete Gas wird auf einem höheren absoluten Druck als dem kritischen Druck verdichtet, und gleichzeitig wird die Temperatur mit Hilfe der Wärmetauscher 7,9 in beiden Behältern 1, 2 leicht über der kritischen Temperatur von 31°C gehalten.

Nach dem Befüllen beider Behälter 1, 2 mit $CO_2$ werden die Anschlußstutzen 3, 4 geschlossen, und dem Wärmetauscher 7 wird warmes bzw. heißes Wasser zugeführt, wodurch die Temperatur des $CO_2$ im Behälter 1 steigt. Gleichzeitig wird dem Wärmetauscher 9 im Behälter 2 Kühlmittel zugeführt, wodurch die Temperatur des $CO_2$ im Behälter 2 unter die kritische Temperatur von 31°C sinkt. Am Boden des Behälters 2 sammelt sich verflüssigtes $CO_2$, das bei eingeschalteter Pumpe 13 durch die Leitung 18 in den Behälter 1 gelangt. Nunmehr strömt das Gas aus dem Behälter 1 via Leitung 19 in den Behälter 2, d.h., direkt in die angeschlossene Arbeitsmaschine 11 und setzt diese in Gang, die wiederum den Generator 12 antreibt. Der damit erzeugte Strom wird durch die Leitung bzw. das Kabel 15 nach außen geleitet.

Konkrete Daten, die diesen Arbeitsprozeß veranschaulichen, sind in Tabelle 1 aufgeführt.

Symbole in Tabelle 1

| | |
|---|---|
| Nr. | = Nummer des Testes |
| V | = Volumen des Behälters 1 bzw. 2 in $m^3$ |
| $P_o$ | = absoluter Gasdruck in atm |
| $T_1$ | = absolute Gastemperatur im Behälter 1 in Kelvin |
| $T_2$ | = absolute Gastemperatur im Behälter 2 in Kelvin |
| $\Delta T$ | = Unterschied der Gastemperaturen in den Behälter 1, 2 in °C |
| $P_1$ | = Gasdruck im Behälter 1 in atm |
| $P_2$ | = Gasdruck im Behälter 2 in atm |
| $\Delta P$ | = Betriebsdruck, d.h., Gasdruckunterschied zwischen P, und P2 in atm |
| Q | = im Behälter 1 gespeicherte Wärme in Kilokalorien |
| W | = Energiekapazität, die im Behälter 1 vorhanden ist, in Megajoule |
| kWh/Tag | = elektrische Leistung der Anlage in Kilowattstunden pro Tag |
| Wasser | = Wassermenge, die durch den Wärmetauscher 7 in Einheiten von Litern pro Minute fließt. |

Die Daten in Tabelle 1 zeigen, daß beide Druckbehälter 1,2 ein Volumen von 10 $m^3$ aufweisen. Die Daten des Tests Nr. 1 zeigen, daß die Arbeitstemperatur $\Delta T$, d.h., der Unterschied zwischen Behälter 1 und 2, 50°C beträgt. Der absolute Druck des $CO_2$ beträgt 200 atm. Der Temperaturunterschied von 50°C im Behälter 1 erhöht den Gasdruck um $\Delta P$ = 33 atm. Das ist der Arbeitsdruck, der über die 200 atm des absoluten Drucks gestiegen ist und mit dem die Arbeitsmaschine 11 betrieben wird.

Im Wärmetauscher 9 fließt Kühlwasser, wodurch die Temperatur des Gases im Behälter 2 unter der kritischen Temperatur von 31°C gehalten wird. Gemäß der thermodynamischen Zustandsgleichung kondensiert ein Teil des $CO_2$ und sammelt sich als Flüssiggas am Boden des Behälters 2. Die Pumpe 13 pumpt die Flüssigkeit in Behälter 1 zurück. In Behälter 1 liegt die Temperatur über der kritischen Temperatur des $CO_2$ und deshalb verdampft das zugeführte Flüssiggas.

Die Daten in Tabelle 1 entsprechen den quantitativen Werten, die mit den bekannten thermodynamischen Gleichungen berechenbar sind.

Test Nr. 1 in Tabelle 1 verdeutlicht die Wärmespeicherkapazität des Gases im Behälter 1, die 35.692 Kilokalorien bzw. 149 Megajoule beträgt. Nach experimentellen Resultaten wird von der gespeicherten Energiemenge alle 20 Minuten die Hälfte davon in elektrische Energie umgewandelt. Technisch ist ein solches Resultat ausschließlich von der Qualität der Wärmetauscher 7, 9 abhängig. Gemäß Test Nr. 1 werden pro Stunde und pro Tag 1.494 Kilowattstunden elektrische Energie erzeugt. Dabei fließen 36 Liter warmes Wasser pro Minute durch den Wärmetauscher 7 im Behälter 1. Das Resultat in Test Nr. 1 zeigt, daß der Wirkungsgrad der Einrichtung im Bereich von 50% liegt. In Tabelle 1 sind weitere numerische Beispiele aufgeführt. Die Daten in den Tests Nr. 1 bis 5 zeigen, daß die Leistung der Einrichtung (Kilowattstunden pro Tag) mit zunehmendem Druck Po steigt, und zwar bei konstantem $\Delta T$ = 50°. In Test Nr. 5 beträgt der absolute Druck 1.500 atm, und die Leistung beträgt bei einem Temperaturunterschied von 50°C 11.207 kWh/pro Tag.

Bei einem Temperaturunterschied von 70°C zeigen die Daten in den Tests Nr. 6 bis 10 ebenfalls eine Leistungssteigerung. Weitere Leistungssteigerungen bei einem Temperaturunterschied von 120°C sind den Daten der Tests Nr. 11 bis 15 entnehmbar. Die Daten in Tabelle 1 verdeutlichen, daß die Leistung der Einrichtung linear mit dem absoluten Druck des Gases ansteigt.

Ferner steigt die Leistung der Einrichtung mit einem Anstieg des Temperaturunterschieds zwischen dem Gas in den Behältern 1, 2. Die Daten in Tabelle 1 sind so zu nutzen, daß bei niedrigem Temperaturunterschied zwischen Wärmeträger und Kühlmittel ein höherer absoluter Druck in beiden Behältern 1,2 notwendig ist. Gemäß der Erfindung kann sogar Niedertemperaturwärme bei einem Unterschied von nur 10°C wirtschaftlich in elektrische Energie umgewandelt werden. Wenn beispielsweise der absolute Druck $P_o$ = 3.000 atm und der Temperaturunterschied 10°C beträgt, dann liegt ein Arbeitsdruck $\Delta P$ von 100 atm vor.

Das Problem der Funktionsfähigkeit von geeigneten Arbeitsmaschinen bei hohen Drücken ist erfindungsgemäß dadurch gelöst,

daß die Arbeitsmaschine 11, der elektrische Generator 12 und die Pumpe 13 im Druckbehälter 2 angeordnet sind.

Beim Arbeitsprozeß der Einrichtung gemäß Fig. 1 muß darauf geachtet werden, daß die elektrische Energieabgabe und die Wärmeenergiezufuhr zeitlich so geregelt sind, daß die $CO_2$-Verflüssigung immer über den $CO_2$-Druck optimal gehalten wird,

was mit den heute verfügbaren elektronischen Regelmöglichkeiten problemlos machbar ist.

Wenn die Einrichtung bei extremen absoluten Druck Po betrieben wird, kann ein Zusatzgas, wie trockene Luft, dem Behälter 2 zugeführt werden. Eine solche Gasmischung arbeitet nach der thermodynamischen Regeln des Partialdrucks. Wenn der Parialdruck des $CO_2$ bspw. 200 atm und der Partialdruck der trockenen Luft 800 atm ist, bedeutet dies, daß im Behälter 2 ein absoluter Druck von 1.000 atm herrscht. Die Luft verbleibt dabei im Behälter 2 als Gaspolster und ist am Arbeitsprozeß nicht beteiligt, und zwar deshalb nicht, weil die Luft hierbei nicht verflüssigt wird und immer über der flüssigen Phase des $CO_2$ im Behälter 2 steht.

Wenn man die Einrichtung nicht bei extremen absoluten Druck P betreiben will, kommt eine Ausführungsform gemäß Fig.2 in Betracht. Hierbei sind zwei beheizbare Behälter 21, 22 via Heißwasserleitungen 25, 26, 27 in Reihe geschaltet, wodurch die Wärme in zwei Temperaturstufen an das Gas abgegeben wird. Das noch warme Wasser aus dem Wärmetauscher 7 im Behälter 21 fließt weiter in den Behälter 22 und gibt die Wärme an das sich dort befindliche Gas ab. Der gekühlte Behälter 23 ist dabei via Leitungen 28, 29 am Behälter 21 in gleicher Weise angeschlossen wie in Fig.1 dargestellt. Gleiches gilt für den Behälter 24, der via Leitungen 30,31 mit dem Behälter 22 verbunden ist. Die Kühlmittelleitungen der Behälter 23,24 sind mit 32,33 bezeichnet. Bei dieser Ausführungsform und konstruktiv optimaler Gestaltung steigt der Wirkungsgrad in den Bereich von 0,6.

Das Arbeitsmedium der Einrichtung gemäß der Fig. 1 und 2 muß nicht zwingend Kohlendioxyd sein, d.h., es gibt auch viele andere Gase, deren kritische Temperatur relativ hoch und deren kritischer Druck relativ niedrig ist, die im einzelnen aufzulisten entbehrlich ist, da bekannt.

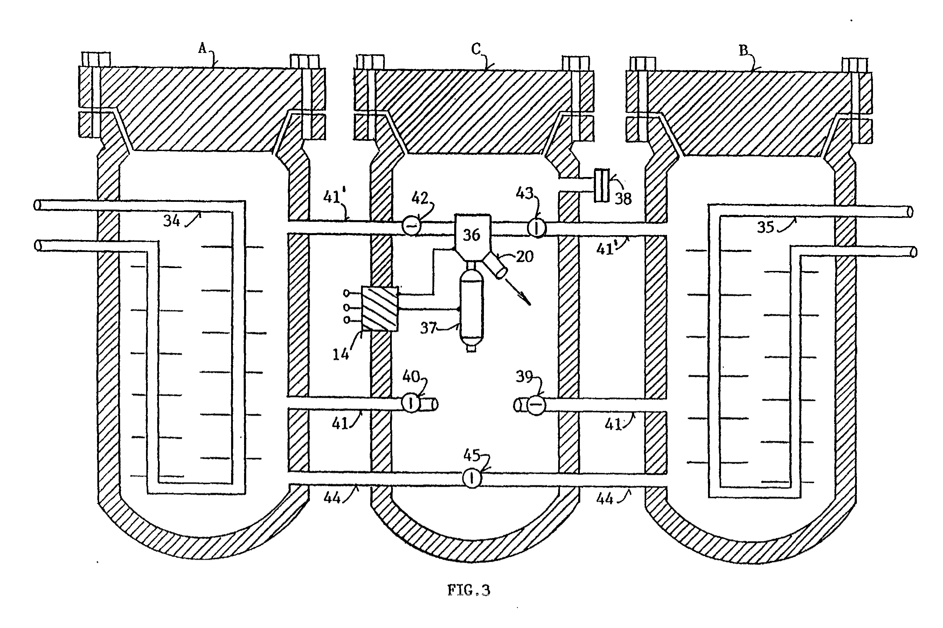

Selbstverständlich wäre das billigste und einfachste Betriebsmittel Luft, deren kritische Temperatur jedoch bei -150°C liegt. Für die Nutzung von Luft als Betriebsmittel ist deshalb eine Einrichtung gemäß Fig. 3 vorgesehen. Hierbei sind in den Behältern A,B Wärmetauscher 34,35 angeordnet, und im Behälter C befindet sich die Arbeitsmaschine 36 mit ihrem elektrischer Generator 37, wobei der Behälter C durch einen in Fig. 3 nicht dargestellten Wärmetauscher gekühlt wird. Ehe der Arbeitszyklus beginnt, werden alle drei Behälter A, B, C durch den Anschlußstutzen 38 am Behälter C mit Luft gefüllt und auf den gewünschten absoluten Druck verdichtet. Dafür sind die Ventile 39, 40 und 45 geöffnet. Außerdem sind die Behälter A, A, B, C mit Leitungen 41 im Sinne der Fig. 1 miteinander verbunden.

Beim Füllen der Einrichtung gemäß Fig. 3 wird der Behälter A mittels des Wärmetauschers 34 gekühlt, und der Behälter B wird mittels des Wärmetauscher 35 auf die gewünschte Temperatur gebracht.

(Test Nr. 1 in Tabelle 2 veranschaulicht dafür die entsprechenden Daten) Danach beginnt der Arbeitszyklus. Die Ventile 39, 40, 42, 43 und 45 sind geschlossen. Danach wird die Luft im Behälter A mittels des Wärmetauschers 34 geheizt. Gleichzeitig wird die Luft im Behälter B durch den Wärmetauscher 35 gekühlt. Durch den sich einstellenden Temperaturunterschied ergibt sich zwischen den Behältern A, B ein relativer Luftdruck $\Delta P_{A-B}$.

Test Nr. 2 in Tabelle 2 veranschaulicht ein Beispiel, bei dem die Lufttemperatur im Behälter A 50°C höher ist als im Behälter B. Der relative durchschnittliche Arbeitsdruck $\Delta P_d$ beträgt 33 atm. Die gespeicherte Wärme beträgt 31.230 kcal. Die so vorhandene Erergie wird in der Arbeitsmaschine 36 in mechanische Arbeit und diese dann vom Generator 37 in elektrische Energie umgesetzt. Dies geschieht, wenn die Ventile 42, 39 geöffnet werden, d.h., wenn die Luft von Behälter A zur Arbeitsmaschine 36 strömt. Durch den Luftausgang 20 strömt die Ablauft der Arbeitsmaschine 36 in den Behälter C und durch das Ventil 39 und Leitung 41 zum Behälter B. Hierbei fällt der Luftdruck im Behälter A und im Behälter B steigt der Luftdruck. Wenn der Arbeitsdruck auf die Grenze der Nutzbarkeit abfällt, werden die Ventil 42, 39 geschlossen und das Ventil 45 in der Leitung 44 wird für kurze Zeit geöffnet. Nach Öffnung des Ventils 45 gleicht sich der Restdruck im Behälter A mit dem Druck in Behälter B aus, das Ventil 45 wird geschlossen und nunmehr wird der Arbeitsvorgang in umgekehrte Richtung durchgeführt, d.h., durch den Wärmetauscher 35 wird die Luft im Behälter B aufgeheizt und gleichzeitig wird die Luft im Behälter A durch Wärmetauscher 34 gekühlt.

Entsprechende numerische Daten für diesen Arbeitsvorgang sind in Test Nr. 3, Tabelle 2, aufgeführt. Dieser Vorgang dauert ca. 15 Minuten, d.h., in dieser Pause liefert die Einrichtung gemäß Fig. 3 keinen Strom. Nach ca. 15 Minuten werden die Ventile 43, 40 geöffnet, und Luft strömt vom Behälter B durch die Arbeitsmaschine 36 und deren Ausgang 20 in den Behälter C und vom Behälter C durch das geöffnete Ventil 40 zum Behälter A.

Test Nr. 3 in Tabelle 2 zeigt alle technischen Daten, die mit diesem Umwandlungsvorgang verbunden sind. Nach Ausgleich des Restdruckes über die Leitung 44 und nach Schließen der Ventile 43, 40 und 45 beginnt der gleiche Vorgang in umgekehrte Richtung. Die technischen Daten in Tabelle 2 lassen erkennen, daß die Arbeitsvorgänge bei dieser Vorrichtung immer wieder die Richtung wechseln.

Symbole in Tabelle 2

BEH       = Behälter, in dem die Luft geheizt wird
$T_A$         = absolute Temperatur in Behälter A in Kelvin
$T_B$         = absolute Temperatur in Behälter B in Kelvin
$P_A$         = absoluter Druck in Behälter A in atm
$P_B$         = absoluter Druck in Behälter B in atm
$P_C$         = absoluter Druck in Behälter C in atm
$\Delta P_{A-B}$     = Druckunterschied zwischen Behälter A und B in atm
$\Delta P_d$        = durchschnittlicher Arbeitsdruck in atm

Die anderen Symbole in Tabelle 2 entsprechen denen in Tabelle 1.

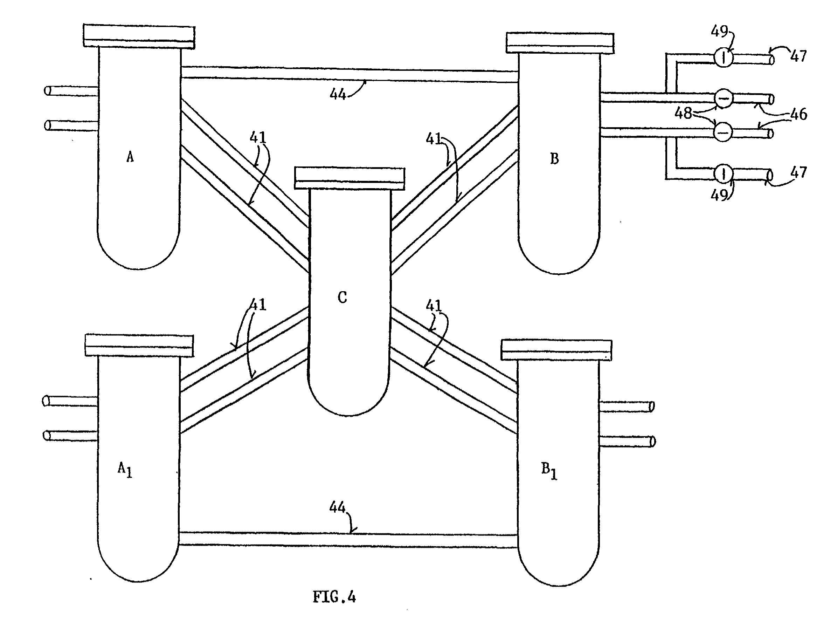

Der durch die oben erwähnte "Betriebspause" gegebene Nachteil ist mit der erfindungsgemäßen Weiterbildung der Einrichtung gemäß Fig.4 gelöst.

Hierbei sind die mit A, B und C bezeichneten Behälter in Fig. 4 die gleichen wie in Fig. 3. Zusätzlich sind jedoch am Behälter C Behälter $A_1$ und Behälter $B_1$ mit entsprechenden Leitungen 41 angeschlossen. Zwischen den Behältern A und B bzw. $A_1$ und $B_1$ ist ebenfalls eine Leitung 44 ( wie beim Beispiel nach Fig. 3) angeordnet, die für den Restdruckausgleich dient.

Eine derart ausgebildete Einrichtung ermöglicht einen kontinuierlichen Betrieb ohne die oben genannte Pause und liefert kontinuierlich Strom. In der Zeit, in der Luft mit einem entsprechenden Arbeitsdruck im Behälter A die Arbeitsmaschine 36 treibt, wird der Behälter $A_1$ geheizt und der Behälter $B_1$ gekühlt. Wenn der Arbeitsdruck auf einen bestimmten Wert abfällt, werden die Behälter A, B vom Behälter C abgekoppelt und die Behälter $A_1$ und $B_1$, an den Behälter C angeschlossen, und die Luft strömt in umgekehrte Richtung. Auch dies ist alles ohne weiteres elektronisch steuerbar, was keiner besonderen Erläuterung bedarf.

Fig. 4 verdeutlicht, daß Heizwasser durch Leitung 46 über den Wärmetauscher in den Behälter B fließen kann. Dabei sind die Ventile 48 geöffnet und die Ventile 49 sind geschlossen. Beim umgekehrten Vorgang wird das Kühlmittel durch die Leitung 47 zum Wärmetauscher( Wärmetauscher sind hier nicht dargestellt) im Behälter B geleitet. Dabei sind die Ventile 49 geöffnet und die Ventile 48 geschlossen. Die Reservoire für die Heiz- und Kühlmedien sind in Fig. 4 nicht dargestellt.

Die in den stark schematisiert Ausführungsbeispielen dargestellten Leitungsführungen sind nur prinzipiell zu verstehen, d.h., diese könnten auch weitgehend durch die Verschlußdeckel 5,6 geführt werden, wobei auch die zum Betrieb der Einrichtung notwendigen Arbeitsaggragate, sofern dies die konstruktiven Gegebenheiten zulassen, innenseitig am Deckel 6 angeordnet und sinngemäß mit den Leitungen verknüpft werden können.

Die Behälterbezugszeichen in den Fig. 2 bis 4 sind nur aus Übersichtsgründen abweichend zu denen in Fig. 1 gewählt worden, sind jedoch jeweils sinngemäß zu verstehen.

| Nr. | V m$^3$ | $P_o$ atm | $T_1$ °K | $T_2$ °K | T °C | $P_1$ atm | $P_2$ atm | $\triangle P$ atm | Q kcal | W MJ | kWh/Tag | Wasser l/min |
|-----|------|-------|------|------|-----|-------|-------|-----|---------|-------|--------|------|
| 1 | 10 | 200 | 353 | 303 | 50 | 233 | 200 | 33 | 35.692 | 149 | 1.494 | 36 |
| 2 | 10 | 500 | 353 | 303 | 50 | 582 | 500 | 82 | 89.230 | 373 | 3.735 | 89 |
| 3 | 10 | 700 | 353 | 303 | 50 | 815 | 700 | 115 | 124.923 | 523 | 5.230 | 125 |
| 4 | 10 | 900 | 353 | 303 | 50 | 1.048 | 900 | 148 | 160.615 | 672 | 6.724 | 160 |
| 5 | 10 | 1.500 | 353 | 303 | 50 | 1.747 | 1.500 | 247 | 267.692 | 1.120 | 11.207 | 268 |
| 6 | 10 | 200 | 373 | 303 | 70 | 246 | 200 | 46 | 49.969 | 209 | 2.092 | 36 |
| 7 | 10 | 500 | 373 | 303 | 70 | 615 | 500 | 115 | 124.923 | 523 | 5.230 | 89 |
| 8 | 10 | 700 | 373 | 303 | 70 | 861 | 700 | 161 | 174.892 | 732 | 7.322 | 125 |
| 9 | 10 | 900 | 373 | 303 | 70 | 1.108 | 900 | 208 | 224.861 | 941 | 9.414 | 160 |
| 10 | 10 | 1.500 | 373 | 303 | 70 | 1.846 | 1.500 | 346 | 374.768 | 1.569 | 15.690 | 268 |
| 11 | 10 | 200 | 423 | 303 | 120 | 279 | 200 | 79 | 85.661 | 358 | 3.586 | 36 |
| 12 | 10 | 500 | 423 | 303 | 120 | 698 | 500 | 198 | 214.153 | 896 | 8.966 | 89 |
| 13 | 10 | 700 | 423 | 303 | 120 | 977 | 700 | 277 | 299.815 | 1.255 | 12.552 | 125 |
| 14 | 10 | 900 | 423 | 303 | 120 | 1.256 | 900 | 356 | 385.476 | 1.614 | 16.139 | 160 |
| 15 | 10 | 1.500 | 423 | 303 | 120 | 2.094 | 1.500 | 594 | 642.460 | 2.689 | 26.898 | 268 |

TABELLE 1

EP 0 943 789 B1

| Nr. | BEH | V m$^3$ | $P_o$ atm | $T_A$ $^oK$ | $T_B$ $^oK$ | $\triangle T$ $^oC$ | $P_A$ atm | $P_B$ atm | $P_C$ atm | $\triangle P_{A-B}$ atm | $\triangle P_d$ atm | Q kcal | kWh/Tag | Wasser l/min |
|---|---|---|---|---|---|---|---|---|---|---|---|---|---|---|
| 1 | B | 10 | 200 | 303 | 353 | 50 | 200 | 200 | 200 | 0 | – | – | – | 32 |
| 2 | A | 10 | 200 | 353 | 303 | 50 | 233 | 171 | 200 | 62 | 33 | 31.230 | 1.307 | 32 |
| 3 | B | 10 | 200 | 303 | 353 | 50 | 171 | 233 | 200 | 62 | 33 | 31.230 | 1.307 | 32 |
| 4 | A | 10 | 700 | 353 | 303 | 50 | 815 | 600 | 700 | 215 | 115 | 109.307 | 4.576 | 110 |
| 5 | B | 10 | 700 | 303 | 353 | 50 | 600 | 815 | 700 | 215 | 115 | 109.307 | 4.576 | 110 |
| 6 | A | 10 | 200 | 373 | 303 | 70 | 246 | 162 | 200 | 84 | 46 | 43.723 | 1.830 | 32 |
| 7 | B | 10 | 200 | 303 | 373 | 70 | 162 | 246 | 200 | 84 | 46 | 43.723 | 1.830 | 32 |
| 8 | A | 10 | 700 | 373 | 303 | 70 | 862 | 569 | 700 | 293 | 162 | 153.030 | 6.407 | 110 |
| 9 | B | 10 | 700 | 303 | 373 | 70 | 569 | 862 | 700 | 293 | 162 | 153.030 | 6.407 | 110 |

TABELLE 2

EP 0 943 789 B1

**Patentansprüche**

1. Einrichtung zur Umwandlung von insbesondere Niedertemperaturwärme in elektrische Energie, wobei die Wärme in mechanische und diese in elektrische Energie umgesetzt wird, und die mindestens zwei hermetisch verschließbare Druckbehälter (1,2; 21 bis 24; A,B,C) aufweist, die durch Leitungen 18,19) miteinander verbunden und mit Mitteln (7,9) zur Wärmezufuhr zum einen Behälter und zur Kühlung des anderen Behälters versehen sind, und wobei ferner am zweitgenannten Druckbehälter (2), ein Betriebsmittelaustauschelement angeordnet ist, das über eine Leitung (18) mit dem Innenraum des erstgenannten Druckbehälters (1) in Verbindung steht, **gekennzeichnet durch** eine Hochdruckleitung die (19) zur Druckseite einer im Inneren des zweitgenannten Behälters (2) angeordneten Arbeitsmaschine (11) führt, die abgangsseitig gegen den Innenraum des Druckbehälters (2) offen und die mit einem ebenfals im Behälter (2) angeordneten Stromgenerator (12) gekoppelt ist, und wobei außerdem Steuer- und Stromleitungen (15,26,17) druckdicht aus dem zweitgenannten Behälter (2) herausgeführt sind.

2. Einrichtung nach Anspruch 1,
   **dadurch gekennzeichnet,**
   **daß** die Mittel (7,9) zur Wärmezufuhr zum erstgenannten Behälter (1) und zur Kühlung des zweitgenannten Behälters (2) in Form von in den Behälterinnenräumen angeordneten Wärmetauschern mit druckdicht nach außen geführten Zu- und Ableitungen (8,10) ausgebildet sind.

3. Einrichtung nach Anspruch 1 oder 2,
   **dadurch gekennzeichnet,**
   **daß** die Druckbehälter (1,2) topfartig ausgebildet und mit Deckeln (5,6) druckdicht verschlossen sind.

4. Einrichtung nach Anspruch 3,
   **dadurch gekennzeichnet,**
   **daß** sämtliche Leitungen durch die Deckel (5,6) der Druckbehälter geführt sind.

5. Einrichtung nach einem der Ansprüche 1 bis 4,
   **dadurch gekennzeichnet,**
   **daß** die Arbeitsmaschine (11) in Form einer Turbine ausgebildet ist.

6. Einrichtung nach einem der Ansprüche 1 bis 5,
   **dadurch gekennzeichnet,**
   **daß** das Betriebsmittelaustauschelement eine im zweitgenannten Behälter (2) angeordnete Pumpe (13) ist.

7. Einrichtung nach einem der Ansprüche 1 bis 6,
   **dadurch gekennzeichnet,**
   **daß** zwei der Behälter (1) in Reihe geschaltet und jedem der Behälter (1) ein zu kühlender Behälter (2) nachgeschaltet ist.

8. Einrichtung nach einem der Ansprüche 1 bis 5,
   **dadurch gekennzeichnet,**
   **daß** der zweitgenannte Behälter (2/C) mit zwei Behältern (1/A,B) der erstgenannten Sorte durch mit Ventilen (39,40) versehenen Leitungen (41) verbunden ist und die Arbeitsmaschine (11) im zweitgenannten Behälter (2/C) über mit Ventilen (42,43) versehen Leitungen (41') mit den beiden Behältern (1/AB) der erstgenannten Sorte in Verbindung steht, die untereinander durch eine Leitung (44) mit Ventil (45) verbunden sind.

9. Einrichtung nach einem der Ansprüche 1 bis 5,
   **dadurch gekennzeichnet,**
   **daß** der zweitgenannte Behälter (2/C) insgesamt mit zwei Paaren von, Behältern (1/A,B; 1/A'B') der erstgenannten Sorte über Leitungen (41) verschaltet ist, wobei die Behälterpaare untereinander über Leitungen (44) in Verbindung stehen und die Heiz- und Kühlmittelleitungen (46,47) umschaltbar ausgebildet sind.

**Claims**

1. A device for converting in particular low-temperature heat into electric energy, whereby the heat is converted into mechanical energy and this is converted into electric energy, and which has at least two hermetically sealable pressurised containers (1, 2; 21 to 24; A, B, C), which are connected via pipes 18, 19) to one another and are provided with means (7, 9) for heat supply to one container and for cooling the other container, and whereby also on the second pressurised container (2) an operating means exchange element is arranged, which is connected via a pipe (18) to the interior of the first pressurised container (1) and whereby also control and flow lines (15, 26, 17) are guided pressure-tight out of the second container (2),

**characterised by** a high-pressure line (19), which leads to the pressure side of a working machine (11) arranged inside the second container (2), which on the exit side is open to the interior of the pressurised container (2) and which is attached to a flow generator (12) likewise arranged in the container (2).

2. The device as claimed in Claim 1, **characterised in that** the means (7, 9) for supplying heat to the first container (1) and for cooling the second container (2) are designed in the form of heat exchangers arranged in the container interiors with pressure-tight outwardly directed supply and discharge lines (8, 10).

3. The device as claimed in Claim 1 or 2, **characterised in that** the pressurised containers (1, 2) are designed pot-shaped and are closed pressure-tight with lids (5, 6).

4. The device as claimed in Claim 3, **characterised in that** all the pipes are guided through the lids (5, 6) of the pressurised container.

5. The device as claimed in any one of Claims 1 to 4, **characterised in that** the working machine (11) is designed in the form of a turbine.

6. The device as claimed in any one of Claims 1 to 5, **characterised in that** the operating means exchange element is a pump (13) arranged in the second container (2).

7. The device as claimed in any one of Claims 1 to 6, **characterised in that** two of the containers (1) are arranged in series and a container (2) to be cooled is arranged downstream of each of the containers (1).

8. The device as claimed in any one of Claims 1 to 5, **characterised in that** the second container (2/C) is connected to two containers (1/A, B) of the first sort via pipes (41) provided with the first sort valves (39, 40), and the working machine (11) in the second container (2/C) is connected via pipes (41') provided with valves (42, 43) to both containers (1/AB) of the first sort, which are connected to one another via a pipe (44) to the valve (45).

9. The device as claimed in any one of Claims 1 to 5, **characterised in that** the second container (2/C) is overall wired with two pairs of containers (1/A, B; 1/A'B') of the first sort via pipes (41), whereby the container pairs are connected to one another via pipes (44) and the heating and cooling means pipes (46, 47) are designed to be interchanged.

**Revendications**

1. Dispositif pour convertir notamment une énergie thermique à basse température en énergie électrique, dans lequel la chaleur est convertie en énergie mécanique et celle-ci est ensuite convertie en énergie électrique, ledit dispositif présentant au moins deux récipients à pression (1,2 ; 21 à 24 ; A,B,C) qui peuvent être fermés hermétiquement, lesquels sont reliés par des conduites (18,19) et sont pourvus de moyens (7,9) prévus pour l'introduction de chaleur dans un récipient et pour le refroidissement dans un autre récipient, et dans lequel en outre un élément d'échange de ressources est disposé au niveau du deuxième récipient à pression (2), lequel est relié par une conduite (18) à l'espace interne du premier récipient à pression (1) et dans lequel en outre des lignes de commande et d'alimentation électrique (15,26,17) résistantes à la pression sortent du deuxième récipient (2),

**caractérisé en ce qu'**une conduite de pression élevée (19) conduit au réservoir de pression d'une chambre de travail (11) disposée à l'intérieur du deuxième récipient (2), laquelle chambre de travail est ouverte à sa sortie sur l'espace interne du récipient à pression (2) et est couplée avec un alternateur (12) disposé également dans le récipient (2).

2. Dispositif selon la revendication 1, **caractérisé en ce que** les moyens (7,9) prévus pour l'introduction de chaleur dans le premier récipient (1) et pour le refroidissement du deuxième récipient (2) sont conçus sous la forme d'échangeurs de chaleur disposés dans les espaces internes des récipients à pression pourvus de conduites d'alimentation et de dérivation (8,10) résistantes à la pression qui ressortent vers l'extérieur.

3. Dispositif selon la revendication 1 ou 2, **caractérisé en ce que** les récipients à pression (1,2) ont la forme d'un chaudron et sont fermés par des couvercles (5,6) résistants à la pression.

4. Dispositif selon la revendication 3, **caractérisé en ce que** toutes les conduites passent à travers les couvercles (5,6) des récipients à pression.

5. Dispositif selon une des revendications 1 à 4, **caractérisé en ce que** la chambre de travail (11) est conçue sous la forme d'une turbine.

6. Dispositif selon une des revendications 1 à 5, **caractérisé en ce que** l'élément d'échange de ressources est une pompe (13) disposée dans le deuxième récipient (2).

7. Dispositif selon une des revendications 1 à 6, **caractérisé en ce que** deux des récipients (1) sont branchés en série et chacun des récipients (1) est branché en aval d'un récipient (2) refroidisseur.

8. Dispositif selon une des revendications 1 à 5, **caractérisé en ce que** le récipient du deuxième type (2/C) est relié à deux récipients du premier type (1/A,B) par des conduites (41) pourvues de soupapes (39,40) du premier type et la chambre de travail (11) du récipient du deuxième type (2/C) est reliée aux deux récipients (1/AB) du premier type par des conduites (41') pourvues de soupapes (42,43), lesquels récipients sont reliés à leur base par une conduite (44) pourvue d'une soupape (45).

9. Dispositif selon une des revendications 1 à 5, **caractérisé en ce que** le récipient du deuxième type (2/C) est raccordé en tout à deux paires de récipients (1/AB ; 1/A'B') du premier type par des conduites (41), dans lequel les paires de récipients sont reliées à leur base par des conduites (44) et les conduites d'introduction de chaleur et de refroidissement (46,47) sont conçues de manière à pouvoir être commutées.

EP 0 943 789 B1

FIG.1

FIG.2

FIG. 3

FIG. 4